# EUROPÄISCHE PATENTSCHRIFT

(11) **EP 0 975 108 B1**
(45) Veröffentlichungstag und Bekanntmachung des Hinweises auf die Patenterteilung: **15.08.2007**
(21) Anmeldenummer: 99108792.5
(22) Anmeldetag: 03.05.1999
(51) Int. Cl.: H04H 1/00

(54) **Verfahren und Vorrichtung zum Abspeichern von Sendernamen von Rundfunksendern mit Radiodatenübertragungen**
Method and means for storing broadcast programme names of broadcast transmitters transmitting Radio Data System (RDS) signals
Méthode et dispositif pour enrégistrer en mémoire les noms des programmes d'émission d'émetteurs qui transmettent des signaux RDS

(30) Priorität: 20.07.1998 DE 19832471
(43) Veröffentlichungstag der Anmeldung: 26.01.2000
(73) Patentinhaber: ROBERT BOSCH GMBH, 70442 Stuttgart (DE)
(72) Erfinder: Wietzke, Joachim, 31141 Hildesheim (DE); Groeger, Klaus-Erwin, 31199 Diekholzen (DE); Dickhoff, Klaus-Dieter, 31139 Hildesheim (DE)

(56) Entgegenhaltungen:
- EP-A- 0 305 172
- EP-A- 0 495 136
- EP-A- 0 762 683

## Beschreibung

### Technisches Gebiet

Die Erfindung betrifft ein Verfahren zum Abspeichern und Anzeigen eines Sendernamens eines momentan in einem RDS-Rundfunkempfänger, insbesondere einem RDS-Autoradio in einem Kraftfahrzeug, eingestellten Rundfunksenders, gemäß dem Oberbegriff des Anspruchs 1. Die Erfindung betrifft ferner einen RDS-Rundfunkempfänger, gemäß dem jeweiligen Oberbegriff des Anspruchs 7.

### Stand der Technik

Ein Signal eines Radio-Daten-Systems (RDS), ein sogenanntes RDS-Signal, dient bei Programmausstrahlungen, beispielsweise von Radioprogrammen für Reisende in einem Kraftfahrzeug, welches mit einem entsprechendem RDS-Autoradio ausgestattet ist, zur Übermittlung verschiedener wichtiger Informationen, mit denen das RDS-Autoradio eine Vielzahl von, insbesondere für einen ungestörten Empfang nötigen Operationen selbständig und automatisiert ausführt, ohne daß beispielsweise ein Fahrer seine Aufmerksamkeit vom Straßenverkehr abwenden und manuelle Eingaben am RDS-Autoradio durchführen muß. Ferner enthält dieses RDS-Signal Informationen, die ggf. auf einer Anzeige des RDS-Autoradios dem Fahrer bzw. einem Benutzer mitgeteilt werden.

Das RDS-Signal ist in einer EBU-Spezifikation DIN EN50067 spezifiziert und enthält bzw. überträgt mit dem Sendersignal auf einer momentan eingestellten Frequenz eines momentan am RDS-Autoradio eingestellten Rundfunksenders zur Differenzierung der verschiedenen Rundfunksender mit entsprechend unterschiedlichen Senderketten einen Programmidentifikations-Code, nachfolgend PI-Code oder kurz PI genannt. Zusätzlich enthält das RDS-Signal einen Programm-Namen, beispielsweise "NDR1", "NDR2" oder "NDR3", welcher nachfolgend mit PS (Programm Service Name) oder Sendemame bezeichnet wird.

Üblicherweise wird bei RDS-Geräten in einer Anzeige bzw. einem Display der Sendername (PS) angezeigt. Dieser hat eine Länge von acht Zeichen und ist per Definition statisch. Zunehmend wird diese Informationsübertragung zweckentfremdet zur Darstellung von Lauftexten, zur Information oder zur Werbung verwendet. Dies lenkt bei Autoradios die Aufmerksamkeit des Fahrers vom Straßenverkehr ab, und es ist ferner oftmals kein sinnvoller Sendername abspeicherbar, da derartige Texte ständig durchlaufen und sich ändern. In, für Fahrer und RDS-Rundfunkempfänger, fremden Gebieten ist der unbekannte Programmname eines neu eingestellten Rundfunksenders im Anzeigenwirrwar häufig nicht erkennbar.

Ferner ist in modernen RDS-Rundfunkempfängern ein sogn. "Traffic Information Memory"-System (TIM) realisiert, welches bei Empfang einer Verkehrsmeldung (Verkehrsfunkinformation oder kurz TP) diese speichert und bei Abruf durch den Fahrer, beispielsweise nachdem dieser in sein Kraftfahrzeug am Beginn seiner Reise eingestiegen ist, abspielt. Dieser gespeicherten Verkehrsmeldung wird üblicherweise der Sendername (PS) zugeordnet. Bei Empfang eines RDS-Signals mit Laufschrift kommt es jedoch zu einer Konfusion, da der abgespeicherten Verkehrsnachricht zufällig ein Textausschnitt oder Wortteil des als Lauftext verwendeten Sendernamens des RDS-Codes zugeordnet wird, da derartige Lauftexte auch während einer Verkehrsdurchsage auftreten.

Somit wird der Benutzer bei einer TIM-Wiedergabe oder Senderabstimmungen, wie beispielsweise Stationstastenaufruf oder "Travelstore", d.h. automatisches abspeichern der stärksten Verkehrsfunksender, durch beliebige Texte abgelenkt und verwirrt. Es wird immer schwieriger einem Programm den richtigen, sinnvollen Namen zuzuordnen und abzuspeichern.

EP-A-0 762 683 beschreibt ein Verfahren in dem für jeden Sender der PS-Code, Frequenzdaten, einen Empfangspegel, und der PI-Code in eine Tabelle geschrieben werden. EP-A-0 305 172 beschreibt ein Verfahren zur Verwaltung von übertragenen PI-Codes und Listen alternativer Frequenzen. EP-A-0 495 136 beschreibt einen Schreib-Lese-Speicher in den empfangenen Sendernamen-Informationen eingeschrieben werden können.

Bevor sich das RDS-System etablierte gab es bei Autoradios die Möglichkeit, bei der Abspeicherung von Rundfunkfrequenzen auf einer Stationstaste zusätzlich einen editierbaren Namen zur Unterscheidung verschiedener Rundfunkprogramme zu speichern. Im RDS-System wird jedoch ausschließlich der im RDS-Signal übertragene Sendername (PS) auf einer Stationstaste abgespeichert bzw. im Display angezeigt.

### Darstellung der Erfindung, Aufgabe, Lösung, Vorteile

Es ist Aufgabe der vorliegenden Erfindung, ein verbessertes Verfahren der obengenannten Art sowie einen verbesserten RDS-Rundfunkempfänger der o.g. Art zur Verfügung zu stellen, um die obengenannten Nachteile zu beseitigen und eine komfortable Bedienung des RDS-Rundfunkempfängers auch bei Empfang von Rundfunksendern, welche als Sendername im RDS-Signal einen Lauftext übermitteln, zu gewährleisten.

Diese Aufgabe wird durch ein Verfahren der o.g. Art mit den in Anspruch 1 gekennzeichneten Merkmalen und durch einen RDS-Rundfunkempfänger mit den in Anspruch 7 gekennzeichneten Merkmalen gelöst.

Dazu ist es bei einem Verfahren der o.g. Art erfindungsgemäß vorgesehen, daß dem in einem RDS-Signal des momentan eingestellten Rundfunksenders übertragenen Programmidentifikations-Code ein Sendername aus einer im RDS-Rundfunkempfänger gespeicherten Tabelle, welche eine eindeutige Zuordnung von Programmidentifikations-Code zu Sendername enthält, zugeordnet wird, wobei dieser zugeordnete Sendername im RDS-Rundfunkempfänger abgespeichert und/oder von diesem angezeigt wird.

Dies hat den Vorteil, daß unabhängig von den als Sendername im RDS-Signal übertragenen Informationen immer und sofort der tatsächliche Sendername des momentan am RDS-Rundfunkempfängers eingestellten Senders zur Verfügung steht. Dies vereinfacht insbesondere bei Rundfunksendern, welche als Sendername mit dem RDS-Signal einen Lauftext übertragen, eine Einstellung eines gewünschten Senders, da nach Einstellen der Empfangsfrequenz bzw. nach Drücken einer vorprogrammierten Stationstaste nicht erst gewartet werden muß, bis ein ggf. eingeblendeter Lauftext beendet ist und der Sendername im Display eingeblendet wird, sondern sofort der richtige Sendername im Display zum Überprüfen des momentan eingestellten Senders durch den Benutzer zur Verfügung steht.

Vorzugsweise Weitergestaltungen des Verfahrens sind in den Ansprüchen 2 bis 6 beschrieben.

Beispielsweise werden in der im RDS-Rundfunkempfänger gespeicherten Tabelle alle Zuordnungen von Programmidentifikations-Codes zu entsprechenden Sendernamen für alle europäischen Sender abgelegt, was einen Speicherbedarf von lediglich etwa 2 kByte erfordert.

Eine Ausblendung störender Lauftexte und eine entsprechende Beruhigung der Anzeige des RDS-Rundfunkempfängers erzielt man dadurch, daß anstatt der als Sendername in dem RDS-Signal des momentan eingestellten Rundfunksenders übertragene Information der aus der Tabelle zugeordnete Sendername permanent in der Anzeige des RDS-Rundfunkempfängers angezeigt wird.

Zweckmäßigerweise wird die Tabelle romresident im RDS-Rundfunkempfänger abgelegt.

Damit ein Benutzer die erfindungsgemäße Funktion eines RDS-Rundfunkempfängers wahlweise aktivieren oder deaktivieren kann, wird die Anzeige des zugeordneten Sendernamens über eine DSC-Funktion (Direct Software Control) oder Schalter des RDS-Rundfunkempfängers zugeschaltet oder abgeschaltet.

Um ggf. Änderungen eines Sendernamens oder neue Sender berücksichtigen zu können, wird diese Änderung eines Sendernamens zu einem bestimmten Programmidentifikations-Code oder der neue Sendemame mit neuem Programmidentifikations-Code in einem zusätzlichen Korrekturspeicher, insbesondere einem EEPROM, abgelegt.

In einer alternativen Ausführungsform der Erfindung wird die als Sendername in einem RDS-Signal des momentan eingestellten Rundfunksenders übertragene Information in vorbestimmten Zeitabständen im RDS-Rundfunkempfänger überprüft und ein konstanter oder regelmäßig wiederkehrender Teil dieser Information als Sendername des momentan eingestellten Rundfunksenders abgespeichert und/oder angezeigt. Dies ist besonders dann vorteilhaft, wenn der Programmidentifikations-Code des momentan eingestellten Senders nicht in der im RDS-Rundfunkempfänger gespeicherten Tabelle vorhanden ist.

Bei einem RDS-Rundfunkempfänger der o.g. Art ist erfindungsgemäß ein Speicher, welcher eine Tabelle mit einer eindeutigen Zuordnung von Programmidentifikations-Codes zu Sendernamen enthält, und eine Auswahleinheit vorgesehen, welche einen vom RDS-Dekoder dekodierten Programmidentifikations-Code eines momentan eingestellten Rundfunksenders erhält und einen diesem Programmidentifikations-Code in dem Speicher zugeordneten Sendernamen auswählt und abspeichert und/oder anzeigt.

Dies hat den Vorteil, daß unabhängig von den als Sendername im RDS-Signal übertragenen Informationen immer und sofort der tatsächliche Sendername des momentan am RDS-Rundfunkempfängers eingestellten Senders zur Verfügung steht. Dies vereinfacht insbesondere bei Rundfunksendern, welche als Sendername mit dem RDS-Signal einen Lauftext übertragen, eine Einstellung eines gewünschten Senders, da nach Einstellen der Empfangsfrequenz bzw. nach Drücken einer vorprogrammierten Stationstaste nicht erst gewartet werden muß, bis ein ggf. eingeblendeter Lauftext beendet ist und der Sendername im Display eingeblendet wird, sondern sofort der richtige Sendername im Display zum Überprüfen des momentan eingestellten Senders durch den Benutzer zur Verfügung steht.

Vorzugsweise Weitergestaltungen des RDS-Rundfunkempfängers sind in den Ansprüchen 8 bis 12 beschrieben.

Beispielsweise enthält die im RDS-Rundfunkempfänger gespeicherte Tabelle alle Zuordnungen von Programmidentifikations-Codes zu entsprechenden Sendernamen für alle europäischen Sender, was einen Speicherbedarf von lediglich etwa 2 kByte erfordert.

Eine Ausblendung störender Lauftexte und eine entsprechende Beruhigung der Anzeige des RDS-Rundfunkempfängers erzielt man dadurch, daß die Auswahleinheit anstatt der als Sendername in dem RDS-Signal des momentan eingestellten Rundfunksenders übertragenen Information den aus der Tabelle zugeordnete Sendername permanent in der Anzeige des RDS-Rundfunkempfängers anzeigt.

Zweckmäßigerweise ist der Speicher als romresidenter Speicher im RDS-Rundfunkempfänger ausgebildet.

Damit ein Benutzer die erfindungsgemäße Funktion eines RDS-Rundfunkempfängers wahlweise aktivieren oder deaktivieren kann, ist eine DSC-Funktion (Direct Software Control) oder Schalter im RDS-Rundfunkempfänger vorgesehen, weiche wahlweise die Anzeige des zugeordneten Sendernamens aktiviert oder deaktiviert.

Um ggf. Änderungen eines Sendernamens oder neue Sender berücksichtigen zu können, ist ein zusätzlicher Korrekturspeicher, bevorzugter Weise ein EEPROM, zum Abspeichern einer Änderung eines Sendernamens zu einem bestimmten Programmidentifikations-Code und/oder zusätzlicher Sendernamen mit neuem Programmidentifikations-Code vorgesehen.

Zweckmäßigerweise weist der Speicher eine Größe von 2 kByte oder mehr auf.

In einer alternativen Ausführungsform der Erfindung ist eine mit dem RDS-Dekoder verbundene Überwachungseinrichtung vorgesehen, welche die als Sendername in einem RDS-Signal des momentan eingestellten Rundfunksenders übertragene Information in vorbestimmten Zeitabständen im RDS-Rundfunkempfänger überprüft und einen konstanten oder regelmäßig wiederkehrenden Teil dieser Information als Sendername des momentan eingestellten Rundfunksenders abspeichert und/oder anzeigt. Dies ist besonders dann vorteilhaft, wenn der Programmidentifikations-Code des momentan eingestellten Senders nicht in der im RDS-Rundfunkempfänger gespeicherten Tabelle vorhanden ist.

### Kurze Beschreibung der Zeichnungen

Nachstehend wird die Erfindung anhand der beigefügten Zeichnungen näher erläutert. Diese zeigen in
- Fig. 1: ein Blockschaltbild einer ersten bevorzugten Ausführungsform eines erfindungsgemäßen RDS-Rundfunkempfängers,
- Fig. 2: ein Blockschaltbild einer zweiten bevorzugten Ausführungsform eines erfindungsgemäßen RDS-Rundfunkempfängers, und
- Fig. 3: ein Blockschaltbild einer dritten bevorzugten Ausführungsform eines erfindungsgemäßen RDS-Rundfunkempfängers.

### Bester Weg zur Ausführung der Erfindung

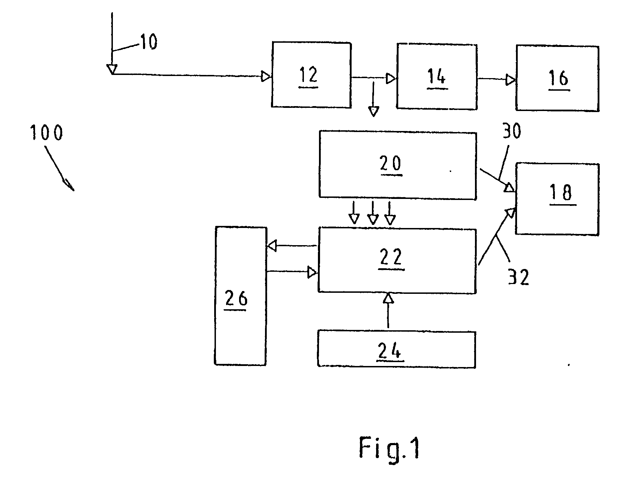

Die in Figur 1 als Blockschaltbild vereinfacht dargestellte erste bevorzugte Ausführungsform eines erfindungsgemäßen RDS-Rundfunkempfängers 100 umfaßt eine Antenne 10, welche ein HF-Signal zur weiteren Verarbeitung in eine HF-Stufe 12 leitet. Dort wird das HF-Signal gefiltert, gleichgerichtet und das NF-Signal herausgefiltert. Dieses NF-Signal wird über eine NF-Stufe 14 einem Lautsprecher 16 zugeführt. Ferner ist eine Anzeige 18 vorgesehen, welche insbesondere Daten aus einem RDS-Dekoder 20, wie beispielsweise Sendername, anzeigt. Die Anzeige 18 zeigt ferner beispielsweise die momentan eingestellte Empfangsfrequenz, den momentan eingestellten Speicherplatz oder ähnliches an, welche aus nicht näher dargestellten Einrichtungen des RDS-Rundfunkempfängers an die Anzeige 18 zugeführt werden.

Ferner werden zwischen der HF-Stufe 12 und der NF-Stufe 14 von dem RDS-Dekoder 20 entsprechende RDS-Signalanteile abgeleitet, welche insbesondere Sendernamen und/oder Programmidentifikations-Code enthalten. Der Programmidentifikations-Code wird an eine Steuereinheit 22 weitergeleitet, welche Zugriff auf einen Festwertspeicher (ROM) 24 hat, in dem zu jedem Programmidentifikations-Code der zugehörige Sendername abgelegt ist. Die Auswahleinheit 24 stellt diesen aus der Tabelle entnommenen Sendernamen statt des vom RDS-Signal übermittelten Sendernamen in der Anzeige 18 dar. Dadurch sind etwaige als Sendernamen über das RDS-Signal übermittelte Lauftexte ausgeblendet. Der Benutzer kann beispielsweise mittels einer DSC-Funktion (Direct Software Control) oder Schalter bestimmen, ob der Sendername aus der Auswahleinheit 24 (Pfeil 32) oder der Sendername aus dem RDS-Dekoder 20 (Pfeil 30), welcher ggf. tatsächlich ein Lauftext ist, auf der Anzeige 18 dargestellt werden soll.

Optional ist zusätzlich ein Korrekturspeicher 26 vorgesehen, welcher zweckmä-βigerweise als ein nichtflüchtiger Lese- und Schreibspeicher (vorzugsweise EEPROM) ausgebildet ist. In diesem Korrekturspeicher können Änderungen eines Sendernamens zu einem bestimmten Programmidentifikations-Code berücksichtigt, d.h. abgelegt werden. Außerdem können zusätzliche Sendernamen, welche noch nicht im ROM 24 enthalten sind, abgelegt werden. Hierzu fragt die Steuereinheit 22 nach Auffinden eines momentan empfangenen Programmidentifikations-Codes in dem Speicher 24 zweckmäßigerweise zusätzlich den Korrekturspeicher 26 ab, um zu überprüfen, ob sich der diesem Programmidentifikations-Code zugeordnete Sendername ggf. inzwischen geändert hat. Wird die Steuereinheit 22 auch im Korrekturspeicher 26 fündig, d.h. ist der momentan empfangene Programmidentifikations-Code auch im Korrekturspeicher 26 abgelegt, dann verwendet die Steuereinheit 22 statt des in Speicher 24 abgelegten Sendernamens den im Korrekturspeicher 26 abgelegten Sendernamen.

Sofern die Steuereinheit 22 im Speicher 24 den momentan empfangenen Programmidentifikations-Code nicht auffindet, fragt sie auch den Korrekturspeicher 26 ab, um festzustellen, ob es sich um einen ggf. nur im Korrekturspeicher 26 abgelegten neuen Sender handelt. Erst wenn die vom Benutzer aktivierte Steuereinheit 22 auch hier nicht fündig wird, übergibt sie die Ansteuerung der Anzeige 18 an den RDS-Dekoder, so daß der tatsächlich über das RDS-Signal übertragene Sendername, welcher ggf. ein Lauftext ist, auf der Anzeige 18 dargestellt wird.

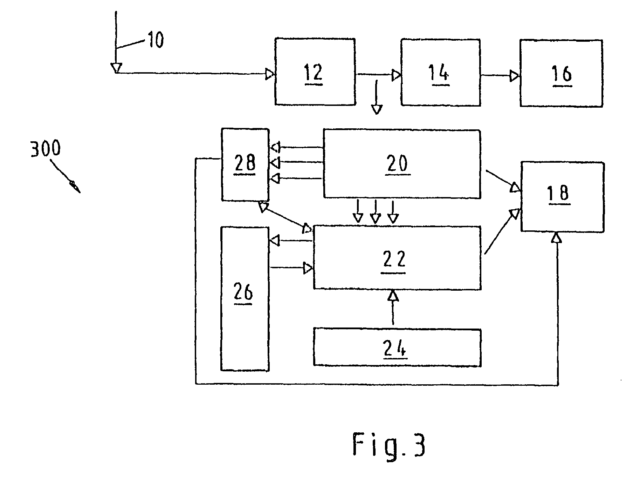

Optional ruft danach die Steuereinheit 22 einen eindeutig identifizierten Sendernamen des momentan eingestellten Rundfunksenders, dessen Programmidentifikations-Code weder im Speicher 24 noch im Korrekturspeicher 26 zu finden war, ab und speichert diesen, wobei sichergestellt sein muß, daß es sich nicht um ein Bruchstück eines Lauftextes handelt. Dies ist beispielsweise dadurch möglich, daß sich die als Sendername über das RDS-Signal übertragene Information über eine vorbestimmte Zeit nicht ändern darf. Dazu muß vorzugsweise die Datenfehlerrate beobachtet werden um festzustellen, ob mögliche Unterschiede durch Störungen / Empfangsprobleme oder durch gewollte, geänderte Übertragungen eines Lauftextes entstanden sind. Diese Abspeicheraktion ist in besonders vorteilhafter Weise mit der nachfolgend erläuterten Ausführungsform gemäß Fig. 3 möglich.

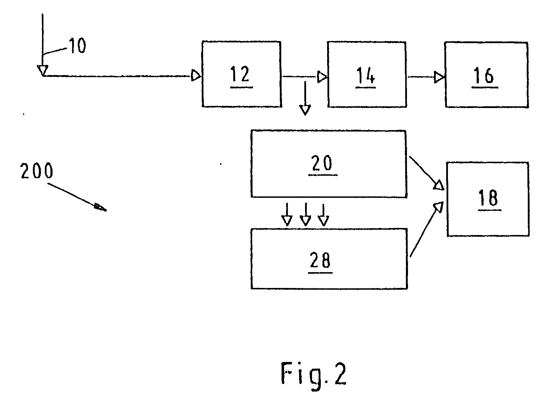

Die in Figur 2 als Blockschaltbild vereinfacht dargestellte zweite bevorzugte Ausführungsform eines erfindungsgemäßen RDS-Rundfunkempfängers 200 entspricht im wesentlichen der ersten Ausführungsform gemäß Fig. 1, wobei jedoch statt der Steuereinheit 22 und der Speicher 24 und 26 eine Überwachungseinrichtung 28 vorgesehen ist, welche zur Beruhigung der Anzeige 18 einen Fixtext, zweckmäßigerweise den Sendernamen des momentan am RDS-Rundfunkempfänger eingestellten Rundfunksenders, darstellt. Hierzu überwacht die Überwachungseinrichtung 28 in regelmäßigen Abständen den vom momentan eingestellten Rundfunksender über dessen RDS-Signal übertragenen Sendernamen, indem der vom RDS-Dekoder 20 dekodierte Sendername an die Überwachungseinrichtung 28 weitergegeben wird. Diese prüft, ob die als Sendername im RDS-Signal übertragene Information über einen längeren Zeitraum konstant geblieben ist und identifiziert somit einen tatsächlichen Sendernamen, da sich ein über das RDS-Signal als Sendername übertragener Lauftext ständig ändert. (Datenfehlerrate)

Optional empfängt die Überwachungseinrichtung 28 vom RDS-Dekoder 20 den jeweils dekodierten Programmidentifikations-Code, so daß die Überwachungseinrichtung 28 feststellen kann, daß sich ein plötzlicher Wechsel der Information des Sendernamens nicht durch einen Lauftext sondern durch einen neuen im RDS-Rundfunkempfänger eingestellten Rundfunksenders ergibt. Dieser Wechsel zu einem anderen Rundfunksender kann beispielsweise manuell vom Benutzer oder automatisch vom RDS-Rundfunkempfänger wegen Verlassen eines Sendebereiches des zuvor eingestellten Rundfunksenders initiiert sein. Alternativ kann es sich jedoch auch um einen Wechsel des Sendernamens während der Ausstrahlung eines Regionalprogrammes handeln, (Regionalisierung) was durch Änderung des 2. Nibbles de PI-Code einhergeht. Die folgende Namensänderung, kann sowohl im "Überwachungsmode", als auch aus dem Namens- oder Korrektur-Speicher erfolgen.

Die in Figur 3 als Blockschaltbild vereinfacht dargestellte dritte bevorzugte Ausführungsform eines erfindungsgemäßen RDS-Rundfunkempfängers 300 ist eine Kombination der ersten und zweiten Ausführungsformen 100 und 200, d.h. dieser RDS-Rundfunkempfänger 300 umfaßt sowohl die Steuereinheit 22 mit Speicher 24 und Korrekturspeicher 26 als auch die Überwachungseinrichtung 28. Ob die Steuereinheit 22 oder die Überwachungseinrichtung 28 die Kontrolle über die Anzeige 18 hat, hängt davon ab, ob der momentan am RDS-Rundfunkempfänger eingestellte Rundfunksender in wenigstens einem der Speicher 24 oder 26 bereits erfaßt ist oder nicht. Ist dieser Sender bereits erfaßt, dann hat die Steuereinheit 22 die Kontrolle über die Anzeige 18. Ist dieser Rundfunksender jedoch noch in keinem der Speicher 24 oder 26 erfaßt, so übergibt die Steuereinheit 22 die Kontrolle über die Anzeige 18 an die Überwachungseinrichtung 28. Sobald die Überwachungseinrichtung 28 einen Sendernamen als solchen und nicht als Lauftext identifiziert hat, übergibt sie diesen Sendernamen beispielsweise an die Steuereinheit 22, welche diese neue Paarung aus Sendemamen und Programmidentifikations-Code im Korrekturspeicher 26 abspeichert. Wenn dann ein nächstes Mal dieser bisher in den Speichern 24 und 26 unbekannte Rundfunksender im RDS-Empfänger eingestellt wird, dann wird die Steuereinheit 22 im Korrekturspeicher 26 fündig und behält die Kontrolle über die Anzeige 18. Zweckmäßigerweise sind wahlweise die Steuereinheit 22 und/oder die Überwachungseinrichtung 28 aktivierbar und deaktivierbar, wobei in letzterem Fall ausschließlich der RDS-Dekoder 20 die Kontrolle über die Anzeige 18 bezüglich des in der Anzeige 18 dargestellten Sendernamens hat.

Besonders vorteilhaft ist die Erfindungsgemäße Funktion bei sogn. TIM-Geräten (Traffic Information Memory). Ist hier beispielsweise am RDS-Rundfunkempfänger ein Sender mit dem Programmidentifikations-Code (PI) "D3XX" mit dem Sendernamen (PS) "SAW" eingestellt und wird statt der Information "SAW" als Sendername ein Lauftext, wie beispielsweise Werbetext, Wetter, Nachrichten o.ä. übertragen, so würde bei herkömmlichen RDS-Rundfunkempfängern bei der Abspeicherung der Verkehrsmeldung als Sendername der gerade übermittelte Bruchteil des Lauftextes mit abgespeichert. Das ist besonders wichtig, wenn ein Fahrzeug in einem Empfangsloch abgestellt wurde und kein Empfang der Verkehrsfunkinformation auf den eingestellten, bekannten Sender möglich ist. Der Suchlauf startet automatisch und stellt einen Sender ein, der eine Verkehrsfunkkennung trägt. Kommt es zu einer TIM Aufzeichnung, ist es wichtig zu wissen, welcher Sender sich dahinter verbirgt.

Beispielsweise bei einem Lauftext "TEMPERATUR NACHTS 10 GRAD" würde ggf. "NACHTS" als Sendername mit der Verkehrsmeldung gespeichert, was extrem verwirrend für den Benutzer ist. Dasselbe Ergebnis ergibt sich, wenn ein Benutzer den gerade am RDS-Rundfunkempfänger eingestellten Rundfunksender in eine Stationstaste abspeichert. Hierbei würde auf der Stationstaste ggf. als Sendername "NACHTS" abgespeichert werden.

Durch die vorliegende Erfindung ist dagegen sichergestellt, daß immer der richtige Sendername, nämlich "SAW" abgespeichert bzw. angezeigt wird. Hierbei ist es alternativ auch möglich, das die erfindungsgemäße Abspeicherung des tatsächlichen Sendernamens anstatt eines ggf. gerade übertragenen Lauftextes unabhängig davon erfolgt, ob die Darstellung des tatsächlichen Sendernamens auf der Anzeige 18 gerade aktiviert ist oder nicht.

### BEZUGSZEICHENLISTE

- 100, 200, 300: RDS-Rundfunkempfänger
- 10: Antenne
- 12: HF-Stufe
- 14: NF-Stufe
- 16: Lautsprecher
- 18: Anzeige
- 20: RDS-Dekoder
- 22: Steuereinheit
- 24: Speicher
- 26: Korrekturspeicher
- 28: Überwachungseinrichtung
- 30: Pfeil
- 32: Pfeil

## Patentansprüche

1. Verfahren zum Anzeigen eines Sendernamens eines momentan in einem RDS-Rundfunkempfänger eingestellten Rundfunksenders,
wobei überprüft wird, ob ein in einem RDS-Signal des momentan eingestellten Rundfunksenders übertragener Programm-Identifikations-Code in einer Tabelle, welche ROM-resident im Rundfunkempfänger abgelegt ist und welche eine eindeutige Zuordnung von Programm-Identifikations-Code zu Sendername enthält, oder in einem wiederbeschreibbaren Korrekturspeicher vorhanden ist,
wobei dann, wenn der Programm-Identifikations-Code im Korrekturspeicher vorhanden ist, ein im Korrekturspeicher dem Programm-Identifikations-Code zugeordneter Sendername ausgelesen und angezeigt wird,
während dann, wenn der Programm-Identifikations-Code im Korrekturspeicher nicht, jedoch in der Tabelle vorhanden ist, ein in der Tabelle dem Programm-Identifikations-Code zugeordneter Sendername ausgelesen und angezeigt wird.

2. Verfahren nach Anspruch 1,
**dadurch gekennzeichnet, daß**
in der im RDS-Rundfunkempfänger gespeicherten Tabelle alle Zuordnungen von Programmidentifikations-Codes zu entsprechenden Sendernamen für alle europäischen Sender abgelegt werden.

3. Verfahren nach Anspruch 1 oder 2,
**dadurch gekennzeichnet, daß**
anstatt der als Sendername in dem RDS-Signal des momentan eingestellten Rundfunksenders übertragene Information der aus der Tabelle zugeordnete Sendername permanent in der Anzeige des RDS-Rundfunkempfängers angezeigt wird.

4. Verfahren nach einem der vorhergehenden Ansprüche 1 bis 3,
**dadurch gekennzeichnet, daß**
die Anzeige des zugeordneten Sendernamens über eine DSC-Funktion (Direct Software Control) oder Schalter des RDS-Rundfunkempfängers zugeschaltet oder abgeschaltet wird.

5. Verfahren nach einem der vorhergehenden Ansprüche 1 bis 4,
**dadurch gekennzeichnet, daß**
eine Änderung eines Sendernamens zu einem bestimmten Programmidentifikations-Code und/oder ein neuer Sendername mit neuem Programmidentifikations-Code in einem zusätzlichen Korrekturspeicher, insbesondere einem EEPROM, abgelegt wird.

6. Verfahren zum Abspeichern und Anzeigen eines Sendernamens eines momentan in einem RDS-Rundfunkempfänger, insbesondere einem RDS-Autoradio in einem Kraftfahrzeug, eingestellten Rundfunksenders, nach einem der vorhergehenden Ansprüche 1 bis 5,
**dadurch gekennzeichnet, daß**
die als Sendername in einem RDS-Signal des momentan eingestellten Rundfunksenders übertragene Information in vorbestimmten Zeitabständen im RDS-Rundfunkempfänger überprüft und ein konstanter oder regelmäßig wiederkehrender Teil dieser Information als Sendername des momentan eingestellten Rundfunksenders abgespeichert und/oder angezeigt wird.

7. RDS-Rundfunkempfänger (200, 300) mit einem RDS-Dekoder (20), welcher zumindest einen in dem RDS-Signal enthaltenen Programm-Identifikations-Code dekodiert,
wobei ein Speicher (24) vorgeshen ist, welcher eine ROM-resident gespeicherte Tabelle mit einer eindeutigen Zuordnung vin Programm-Identifikations-Codes zu Sendernamen enthält,
wobei ein zusätzlicher Korrekturspeicher (26) zum Abspeichern einer Änderung eines Sendernamens zu einem bestimmten Programm-Identifikations-Code und/oder zusätzlichen Sendernamen mit einem neuen Programm-Identifikations-Code vorgesehen ist,
wobei eine Steuereinheit (22) vorgesehen ist, welche einem vom RDS-Dekoder (20) dekodierten Programm-Identifikations-Code eines momentan eingestellten Rundfunksenders erhält und einen diesem Programm-Identifikations-Code in der Tabelle zugeordneten Sendernamen auswählt und anzeigt, sofern dieser Programm-Identifikations-Code im zusätzlichen Korrekturspeicher (26) nicht vorhanden ist oder einen diesem Programm-Identifikations-Code in dem zusätzlichen Korrekturspeicher (26) zugeordneten Sendernamen auswählt und anzeigt, sofern dieser Programm-Identifikations-Code im zusätzlichen Korrekturspeicher (26) vorhanden ist.

8. RDS-Rundfunkempfänger (100,300) nach Anspruch 7,
**dadurch gekennzeichnet, daß**
die im RDS-Rundfunkempfänger (100,300) gespeicherte Tabelle alle Zuordnungen von Programmidentifikations-Codes zu entsprechenden Sendernamen für alle europäischen Sender enthalten kann.

9. RDS-Rundfunkempfänger (100,300) nach Anspruch 7 oder 8,
**dadurch gekennzeichnet, daß**
die Steuereinheit (22) anstatt der als Sendername in dem RDS-Signal des momentan eingestellten Rundfunksenders übertragenen Information den aus der Tabelle zugeordnete Sendername permanent in einer Anzeige (18) des RDS-Rundfunkempfängers (100,300) anzeigt.

10. RDS-Rundfunkempfänger (100,300) nach einem der Ansprüche 7 bis 9,
**dadurch gekennzeichnet, daß**
eine DSC-Funktion (Direct Software Control) oder Schalter im RDS-Rundfunkempfänger (100,300) vorgesehen ist, welche wahlweise die Anzeige des zugeordneten Sendernamens aktiviert oder deaktiviert

11. RDS-Rundfunkempfänger (100,300) nach einem der Ansprüche 7 bis 10,
**dadurch gekennzeichnet, daß**
der Speicher (24) und/oder der Korrekturspeicher (26) eine Größe von 2 kByte oder mehr aufweist.

12. RDS-Rundfunkempfänger (200,300) mit einem RDS-Dekoder (20), welcher zumindest eine als Sendername in einem RDS-Signal enthaltene Information dekodiert, nach einem der Ansprüche 7 bis 11,
**dadurch gekennzeichnet, daß**
eine mit dem RDS-Dekoder (20) verbundene Überwachungseinrichtung (28) vorgesehen ist, welche die als Sendername in einem RDS-Signal des momentan eingestellten Rundfunksenders übertragene Information in vorbestimmten Zeitabständen im RDS-Rundfunkempfänger (200,300) überprüft und einen konstanten oder regelmäßig wiederkehrenden Teil dieser Information als Sendername des momentan eingestellten Rundfunksenders abspeichert und/oder anzeigt.

## Claims

1. Method for indicating a station name for a broadcast radio station which is currently set in an RDS broadcast radio receiver,
where a check is carried out to determine whether a programme identification code transmitted in an RDS signal from the currently set broadcast radio station is present in a table, which is stored ROM-resident in the broadcast radio receiver and which contains an explicit association between the programme identification code and the station name, or in a rewriteable correction memory,
where if the programme identification code is present in the correction memory then a station name associated with the programme identification code in the correction memory is read and indicated,
whereas if the programme identification code is not present in the correction memory but is present in the table then a station name associated with the programme identification code in the table is read and indicated.

2. Method according to Claim 1,
**characterized in that**
the table stored in the RDS broadcast radio receiver is used to store all the associations between programme identification codes and corresponding station names for all the European stations.

3. Method according to Claim 1 or 2,
**characterized in that**
instead of the information transmitted as station name in the RDS signal from the currently set broadcast radio station the associated station name from the table is permanently indicated in the indicator on the RDS broadcast radio receiver.

4. Method according to one of the preceding Claims 1 to 3,
**characterized in that**
the indication of the associated station name is turned on or turned off by means of a DSC (Direct Software Control) function or a switch on the RDS broadcast radio receiver.

5. Method according to one of the preceding Claims 1 to 4,
**characterized in that**
a change in a station name for a particular programme identification code and/or a new station name with a new programme identification code is/are stored in an additional correction memory, particularly an EEPROM.

6. Method for storing and indicating a station name for a broadcast radio station which is currently set in an RDS broadcast radio receiver, particularly an RDS car radio in a motor vehicle, according to one of the preceding Claims 1 to 5,
**characterized in that**
the information transmitted as station name in an RDS signal from the currently set broadcast radio station is checked at predetermined time intervals in the RDS broadcast radio receiver, and a constant or regularly recurring portion of this information is stored and/or indicated as station name for the currently set broadcast radio station.

7. RDS broadcast radio receiver (200, 300) with an RDS decoder (20) which decodes at least one programme identification code contained in the RDS signal,
where a memory (24) is provided which contains a table, stored ROM-resident, with an explicit association between programme identification codes and station names,
an additional correction memory (26) being provided for storing a change in a station name for a particular programme identification code and/or additional station names with a new programme identification code,
where a control unit (22) is provided which receives a programme identification code, decoded by the RDS decoder (20), for a currently set broadcast radio station and selects and indicates a station name associated with this programme identification code in the table if this programme identification code is not present in the additional correction memory (26), or selects and indicates a station name associated with this programme identification code in the additional correction memory (26) if this programme identification code is present in the additional correction memory (26) .

8. RDS broadcast radio receiver (100, 300) according to Claim 7,
**characterized in that**
the table stored in the RDS broadcast radio receiver (100, 300) can contain all the associations between programme identification codes and corresponding station names for all the European stations.

9. RDS broadcast radio receiver (100, 300) according to Claim 7 or 8,
**characterized in that**
instead of the information transmitted as station name in the RDS signal from the currently set broadcast radio station the control unit (22) indicates the associated station name from the table permanently in an indicator (18) on the RDS broadcast radio receiver (100, 300).

10. RDS broadcast radio receiver (100, 300) according to one of Claims 7 to 9,
**characterized in that**
a DSC (Direct Software Control) function or switch in the RDS broadcast radio receiver (100, 300) is provided which selectively actives or deactivates the indication of the associated station name.

11. RDS broadcast radio receiver (100, 300) according to one of Claims 7 to 10,
**characterized in that**
the memory (24) and/or the correction memory (26) has a size of 2 kbytes or more.

12. RDS broadcast radio receiver (200, 300) with an RDS decoder (20) which decodes at least one piece of information contained as a station name in an RDS signal, according to one of Claims 7 to 11,
**characterized in that**
a monitoring device (28) connected to the RDS decoder (20) is provided which checks the information transmitted as station name in an RDS signal from the currently set broadcast radio station at predetermined time intervals in the RDS broadcast radio receiver (200, 300) and stores and/or indicates a constant or regularly recurring portion of this information as station name for the currently set broadcast radio station.

## Revendications

1. Procédé d'affichage d'un nom d'un émetteur radio momentanément réglé dans un récepteur RDS (radio) transmettant des données (radio), selon lequel
on vérifie si un code d'identification de programme transmis dans un signal RDS (de données radio) de l'émetteur radio momentanément réglé est présent dans un tableau archivé dans le récepteur radio en tant que résident dans une ROM et qui contient une association claire du code d'identification de programme au nom de l'émetteur, ou est présent dans une mémoire de correction réinscriptible,
ensuite, si le code d'identification de programme est présent dans la mémoire de correction, on lit ou on affiche un nom d'émetteur associé au code d'identification de programme dans la mémoire de correction, tandis que si le code d'identification de programme n'est pas présent dans la mémoire de correction, mais est présent dans le tableau, on lit on affiche un nom d'émetteur associé au code d'identification de programme dans ce tableau.

2. Procédé selon la revendication 1,
**caractérisé en ce que**
toutes les associations de codes d'identification de programmes aux noms d'émetteurs correspondants, pour tous les émetteurs européens, sont déposées dans le tableau enregistré dans le récepteur RDS.

3. Procédé selon la revendication 1 ou 2,
**caractérisé en ce qu'**
au lieu de l'information transmise comme nom d'émetteur dans le signal RDS de l'émetteur radio momentanément réglé on affiche, le nom d'émetteur associé dans le tableau en permanence dans l'affichage du récepteur RDS.

4. Procédé selon l'une des revendications précédentes 1 à 3,
**caractérisé en ce qu'**
on active ou on coupe l'affichage du nom d'émetteur associé par une fonction de commande directe du logiciel ou par un commutateur du récepteur RDS.

5. Procédé selon l'une des revendications précédentes 1 à 4,
**caractérisé en ce qu'**
un changement d'un nom d'émetteur pour un code d'identification de programme déterminé et/ou un nouveau nom d'émetteur avec nouveau code d'identification de programme sont déposés dans une mémoire de correction supplémentaire, en particulier une mémoire EEPROM.

6. Procédé d'enregistrement et d'affichage d'un nom d'émetteur d'un émetteur radio momentanément réglé dans un récepteur RDS, en particulier un autoradio RDS dans un véhicule automobile, selon l'une des revendications précédentes 1 à 5,
**caractérisé en ce que**
dans le récepteur RDS l'information transmise comme nom d'émetteur dans le signal RDS de l'émetteur radio momentanément réglé est vérifiée à intervalles de temps prédéterminés, et une partie constante ou régulièrement récurrente de cette information est enregistrée et/ou affichée en tant que nom d'émetteur de l'émetteur radio momentanément réglé.

7. Récepteur RDS (200, 300) comportant un décodeur RDS (20), qui décode au moins un code d'identification de programme contenu dans un signal de données radio, comprenant :
- une mémoire (24) qui contient un tableau enregistré en tant que résident dans une mémoire ROM, comprenant une association claire de codes d'identification de programmes à des noms d'émetteurs,
- une mémoire de correction supplémentaire (26) pour enregistrer un changement d'un nom d'émetteur pour un code d'identification de programme déterminé et/ou un nom d'émetteur supplémentaire avec un nouveau code d'identification de programme,
- une unité de commande (22) qui reçoit un code d'identification de programme d'un émetteur radio momentanément réglé, décodé par le décodeur RDS (20), et qui choisit et affiche un nom d'émetteur associé à ce code d'identification de programme dans le tableau, si ce code d'identification de programme n'est pas présent dans la mémoire de correction supplémentaire (26), ou choisit et affiche un nom d'émetteur associé à ce code d'identification de programme dans la mémoire de correction supplémentaire (26) si ce code d'identification de programme est présent dans cette mémoire de correction supplémentaire (26).

8. Récepteur RDS (100, 300) selon la revendication 7,
**caractérisé en ce que**
le tableau enregistré dans le récepteur RDS (100, 300) contient toutes les associations de codes d'identification de programme aux noms d'émetteurs correspondants pour tous les émetteurs européens.

9. Récepteur RDS (100, 300) selon la revendication 7 ou 8,
**caractérisé en ce que**
l'unité de commande (22), au lieu de l'information transmise comme nom d'émetteur dans le signal RDS de l'émetteur radio momentanément réglé, affiche le nom d'émetteur associé dans le tableau en permanence dans un affichage (18) du récepteur RDS (100, 300).

10. Récepteur RDS (100, 300) selon l'une des revendications 7 à 9,
**caractérisé en ce qu'**
une fonction de commande directe de logiciel (DSC) ou un commutateur dans le récepteur RDS (100, 300), active ou désactive au choix l'affichage du nom d'émetteur associé.

11. Récepteur RDS (100, 300) selon l'une des revendications 7 à 10,
**caractérisé en ce que**
la mémoire (24) et/ou la mémoire de correction (26) présente une taille de 2 kilo-octets ou plus.

12. Récepteur RDS (200, 300) comportant un décodeur RDS (20), qui décode au moins une information contenue comme nom d'émetteur dans un signal RDS, selon l'une des revendications 7 à 11,
**caractérisé en ce qu'**
un dispositif de surveillance (28) lié au décodeur RDS (20) vérifie dans le récepteur RDS (200, 300), à intervalles de temps prédéterminés, l'information transmise comme nom d'émetteur dans un signal RDS de l'émetteur radio momentanément réglé, et une partie constante ou régulièrement récurrente de cette information est enregistrée et/ou affichée comme nom d'émetteur de l'émetteur radio momentanément réglé.
